Europäisches Patentamt

European Patent Office

Office européen des brevets

(19)

(11) **EP 0 992 370 A1**

(12) **DEMANDE DE BREVET EUROPEEN**

(43) Date de publication:
**12.04.2000 Bulletin 2000/15**

(51) Int. Cl.⁷: $B60C\ 23/06$, $B60C\ 17/01$

(21) Numéro de dépôt: **99117330.3**

(22) Date de dépôt: **03.09.1999**

(84) Etats contractants désignés:
**AT BE CH CY DE DK ES FI FR GB GR IE IT LI LU MC NL PT SE**
Etats d'extension désignés:
**AL LT LV MK RO SI**

(30) Priorité: **02.10.1998 FR 9812392**

(71) Demandeur: **Valeo Electronique**
**94042 Créteil (FR)**

(72) Inventeurs:
• **Permuy, Alfred**
**92500 Rueil Malmaison (FR)**
• **Breneol, Laurent**
**75013 Paris (FR)**

(74) Mandataire: **Lemaire, Marc et al**
**Valeo Management Services,**
**Propriété Industrielle,**
**2, rue André Boulle,**
**B.P. 150**
**94017 Créteil (FR)**

(54) **Procede et dispositif pour la detection de la signature vibratoire d'un insert de securite equipant un pneumatique**

(57) Procédé pour la détection de vibrations engendrées par le roulage d'un pneumatique sur un insert de sécurité, dans lequel on mesure un signal de vibrations dans une bande de fréquence donnée et on traite la mesure ainsi effectuée pour détecter un mode de résonance engendré par ce roulage, caractérisé an ce qu'on détermine l'énergie du signal ($\gamma$) mesuré par le capteur dans deux bandes de fréquences, l'une étroite ($\Delta fe$), l'autre large ($\Delta fl$), qui sont centrées sur la même raie du mode de résonance et en ce qu'on compare le rapport (K1/K2) entre ces deux énergies à un seuil d'alerte donné.

FIG.1

## Description

La présente invention est relative à la détection de la signature vibratoire d'un insert de sécurité équipant un pneumatique.

On connaît déjà des pneumatiques équipés d'inserts de sécurité sur lesquels lesdits pneumatiques viennent en appui lors d'une crevaison ou d'une perte de pression importante.

Toutefois, la durée de vie d'un tel insert de sécurité est limitée et c'est pourquoi il est généralement nécessaire de prévoir des moyens permettant d'alerter le conducteur de l'apparition d'un incident sur l'un des pneumatiques de son véhicule.

Une première solution, connue notamment par la demande de brevet WO94/03338, consiste à utiliser des dispositifs permettant la détection d'un ou plusieurs modes de résonance caractéristiques du roulage en appui d'un pneumatique sur son insert.

Un dispositif de ce type comporte un ou plusieurs accéléromètres, des moyens pour filtrer les signaux de mesure d'accélération dans une ou plusieurs bandes de fréquences, ainsi que des moyens de traitement qui déterminent à partir de ces mesures d'accélération des grandeurs caractéristiques qui sont ensuite comparées à des seuils de détection d'alerte.

Dans une autre solution également déjà connue, on utilise des inserts de sécurité qui comportent des moyens qui permettent de dégrader volontairement le comportement vibratoire du véhicule lors d'un roulage en appui sur ces inserts. Les vibrations caractéristiques ainsi générées avertissent le conducteur, par exemple par l'intermédiaire d'un dispositif de détection adapté, d'un état de pression anormal sur l'un de ses pneumatiques.

On pourra à cet égard par exemple se référer au brevet US 4 262 724 ou au brevet US 4 157 726,

Or, que l'insert de sécurité comporte ou non des moyens pour générer un mode de vibrations dégradé, il est souhaitable que le traitement mis en oeuvre pour détecter la signature caractéristique du roulage sur l'insert de sécurité puisse prendre en compte le niveau vibratoire du sol, de façon à éviter le déclenchement de fausses alarmes notamment lorsque le véhicule roule sur des routes ou chemins plus chaotiques..

Une première solution à cet effet pourrait consister à déterminer un paramètre caractéristique du niveau vibratoire du sol, par exemple à partir des mesures d'accélération dans certaines bandes de fréquences, et à faire dépendre le ou les seuils de détection d'alerte de ce paramètre.

Mais, on comprend qu'un tel traitement nécessiterait une puissance de calcul importante.

Un but de l'invention est de proposer un traitement de détection simple qui permette de prendre en compte le niveau vibratoire du sol, mais qui ne nécessite pas, pour être mis en oeuvre, une grande puissance de calcul.

A cet effet, l'invention propose un procédé pour la détection de vibrations engendrées par le roulage d'un pneumatique sur un insert de sécurité, dans lequel on mesure un signal de vibrations dans une bande de fréquence donnée et on traite la mesure ainsi effectuée pour détecter un mode de résonance engendré par ce roulage, caractérisé en ce qu'on détermine l'énergie du signal détecté par le capteur dans deux bandes de fréquences, l'une étroite, l'autre large, qui sont centrées sur la même raie du mode de résonance et en ce qu'on compare le rapport entre ces deux énergies à un seuil d'alerte donné.

Le rapport entre deux énergies correspondant l'une à une bande étroite, l'autre à une bande large centrée sur une même fréquence est en effet indépendant du bruit ambiant (en l'occurrence, le niveau vibratoire de la route).

Le traitement proposé permet par conséquent de s'affranchir du bruit ambiant et ce d'une façon particulièrement simple.

Un tel procédé est avantageusement complété par les différentes caractéristiques suivantes prises seules ou selon toutes leurs combinaisons possibles :

- pour déterminer l'énergie du signal dans une bande de fréquence, on mélange le signal détecté à deux signaux périodiques qui sont en quadrature de phase et dont la fréquence correspond à la fréquence du mode de résonance ;
- pour déterminer l'énergie du signal dans une bande de fréquence, on détermine une norme d'un vecteur dont les deux coordonnées correspondent au signal mesuré mélangé avec les deux signaux périodiques en quadrature de phase et intégrés pendant une durée égale à deux fois l'inverse de la largeur de cette bande de fréquence ;
- les signaux périodiques sont des signaux carrés prenant un premier niveau pendant une demi-période et un niveau inverse pendant la demi-période suivante ;
- le signal de vibrations mesuré est échantillonné et numérisé, puis est multiplié avec des signaux carrés en quadrature de phase, dont la fréquence correspond à la fréquence du mode de résonance, qui valent 1 pendant une demi-période et -1 pendant la demi-période suivante ;
- la norme déterminée est la somme des valeurs absolues des coordonnées.

L'invention concerne également un dispositif pour la détection de vibrations engendrées par le roulage d'un pneumatique sur un insert de sécurité comportant un capteur pour la mesure d'un signal de vibrations dans une bande de fréquence donnée et des moyens pour traiter la mesure de ce capteur et détecter un mode de résonance engendré par ce roulage, caractérisé en ce que ces moyens de traitement comportent des moyens pour mettre en oeuvre le traitement du procédé précité.

Avantageusement, les moyens de traitement comportent un microcontrôleur 8 bits.

Egalement, ils peuvent comporter des moyens de traitement comportant des moyens analogiques.

De préférence, ils comportent un circuit intégré spécifique.

D'autres caractéristiques et avantages de l'invention ressortiront encore de la description qui suit. Cette description est purement illustrative et non limitative. Elle doit être lue en regard des dessins annexés sur lesquels :

- la figure 1 est une représentation schématique d'un dispositif conforme à un mode de réalisation de l'invention ;
- la figure 2 est une représentation schématique illustrant les différentes étapes d'un traitement conforme à un mode de mise en oeuvre de l'invention.

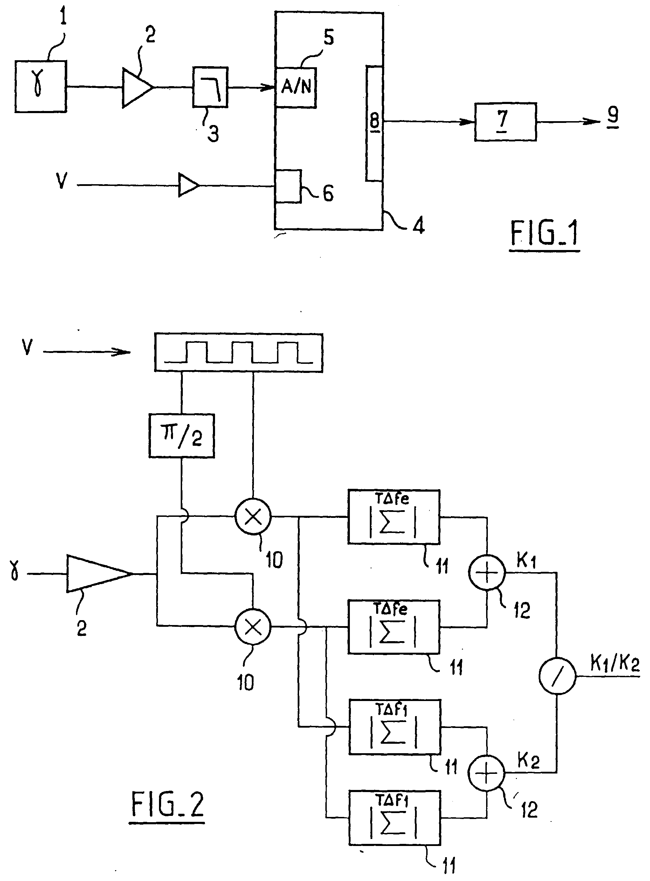

Le dispositif de détection illustré schématiquement sur la figure 1 comporte un accéléromètre 1, relié à une entrée de conversion analogique/numérique 5 d'un microcontrôleur 4 par l'intermédiaire de moyens d'amplification 2 et de moyens de filtrage 3.

Le microcontrôleur 4 est un microcontrôleur 8 bits recevant sur une autre entrée 6 un signal à impulsions à largeur modulée (PWM ou Pulse Width Modulation selon la terminologie de l'Homme du Métier) qui lui donne la fréquence de tour de roue du véhicule et à partir duquel il génère un signal d'horloge.

Les moyens de filtrage sont de type passe-bas et ont une fréquence de coupure inférieure à 500 Hz.

Le dispositif comporte également des moyens d'interface 7 qui sont reliés à une sortie 8 du microcontrôleur 4 et qui permettent audit microcontrôleur 4 d'actionner des moyens 9 pour la génération d'un signal d'avertissement, lorsqu'à l'issue du traitement, ledit microcontrôleur 4 détecte la défaillance d'un pneumatique.

Les moyens 9 sont par exemple constitués par une diode électroluminescente, par des moyens d'affichage ou encore par des moyens d'avertissement sonore.

Le signal de tension amplifié et filtré reçu sur le convertisseur analogique 5 est échantillonné par ledit convertisseur 5 à la fréquence d'horloge générée à partir du signal reçu sur l'entrée 6.

Ainsi qu'illustré sur la figure 2, le signal ainsi échantillonné est mélangé par le microprocesseur 4 d'une part avec un signal carré dont la fréquence est celle du mode de résonance que l'on souhaite détecter et d'autre part avec un signal carré déphasé de $\pi/2$ par rapport au premier signal (multiplicateurs 10).

Ces signaux carrés en quadrature de phase avec lesquels on mélange le signal échantillonné valent 1 pendant une demi-période et -1 pendant une autre demi-période. Ils sont par exemple générés avec le signal d'horloge à l'aide de chronogrammes normalisés mémorisés dans la mémoire de programme (ROM) du microcontrôleur. Leur fréquence - qui est la fréquence du mode de résonance que l'on cherche à détecter - est par exemple égale à deux fois ou six fois la fréquence de tour des roues du véhicule.

Les valeurs ainsi obtenues sur chacune de ces deux voies sont sommées de façon indépendante sur chacune de ces deux voies d'une part pendant un temps $T_{\Delta fe}$ et d'autre part pendant un temps $T_{\Delta fl}$ (étapes 11).

Les temps $T_{\Delta fe}$ et $T_{\Delta fl}$ sont des durées d'analyse temporelle correspondant à deux largeurs de bande fréquentielles, l'une étroite $\Delta fe$ contenant essentiellement la raie recherchée, l'autre $\Delta fl$ plus large intégrant le bruit de fond.

Plus précisément, les durées d'analyse $T_{\Delta fe}$ et $T_{\Delta fl}$ sont telles que

$$T_{\Delta fe} = 2/\Delta fe$$

et

$$T_{\Delta fl} = 2/\Delta fl$$

Pour chacune de ces deux bandes de fréquence $\Delta fe$ et $\Delta fl$, le microprocesseur 4 somme les valeurs absolues des sommes obtenues pour chacune des deux voies déphasées (étapes 12).

Ainsi, on obtient pour la bande de fréquence $\Delta fe$ un paramètre K1 qui vérifie :

$$K1 = \left| \sum_{n=0}^{N.t_e <= T\Delta fe} x(nt_e).h_k(nt_e) \right| + \left| \sum_{n=0}^{N.t_e <= T\Delta fe} x(nt_e).h_k^q(nt_e) \right|$$

et pour la bande $\Delta fl$ un paramètre K2 qui vérifie :

$$K2 = \left| \sum_{n=0}^{N.t_e <= T\Delta fl} x(nt_e).h_k(nt_e) \right| + \left| \sum_{n=0}^{N.t_e <= T\Delta fl} x(nt_e).h_k^q(nt_e) \right|$$

On remarquera que la détermination de K1 et K2 à partir des formules données ci-dessus revient à calculer numériquement la norme valeur absolue d'un vecteur dont les deux coordonnées correspondent au signal mesuré mélangé aux deux signaux en quadrature de phase et intégré pendant une durée égale à deux fois l'inverse de la largeur de cette bande de fréquence.

Ces paramètres K1 et K2 sont donc des approximations numériques de l'énergie du signal d'accélération dans chacune des deux bandes précitées.

Or, on rappelle que l'énergie présente dans une raie d'un signal est la transformée de Fourrier du signal calculée sur une durée T d'analyse du signal.

Le calcul de cette transformée de Fourrier nécessiterait le stockage de tous les échantillons acquis durant la période T, ainsi qu'un grand nombre de multiplications et d'additions, qui ne pourraient être effectuées en temps réel par un système de traitement économique, et notamment avec un microcontrôleur 8 bits, même avec l'utilisation d'algorithmes rapides comme celui de la Transformée de Fourrier Rapide.

Le traitement proposé pour déterminer l'énergie du signal d'accélération s'avère quant à lui particulièrement simple et peut être mis en oeuvre sur un microprocesseur de faible puissance.

En particulier, il ne nécessite pas de stocker les signaux échantillonnés.

Egalement, il ne nécessite aucune multiplication et ne met en oeuvre que des sommations et inversions.

Et le fait que pour déterminer l'énergie du signal, il utilise non pas la norme euclidienne mais la norme valeur absolue contribue également à simplifier les calculs mis en oeuvre.

Après avoir déterminé les deux paramètres K1 et K2, le microcontrôleur 4 détermine le rapport entre les énergies des deux largeurs de bande.

Puis, il compare le rapport K1/K2 ainsi obtenu à une valeur seuil. Lorsque le rapport K1/K2 est supérieur à cette valeur seuil, cela signifie qu'il y a résonance du mode que l'on cherche à détecter et que le pneumatique roule sur son insert. Le microcontrôleur 4 génère alors, par l'intermédiaire de l'interface 7, un signal d'alerte à destination du conducteur.

Le seuil de détection auquel le rapport K1/K2 est comparé est par exemple égal à 1/3.

On notera que la détection ainsi réalisée est affranchie par rapport au niveau d'excitation du sol, étant donné que le rapport K1/K2 est un paramètre indépendant du bruit de fond.

Bien entendu, d'autres modes de mise en oeuvre du traitement proposé par l'invention sont envisageables. En particulier, le calcul numérique qu'effectue le microcontrôleur de faible puissance peut être remplacé en partie ou totalement par un traitement analogique effectué à la cadence de l'échantillonnage du signal vibratoire. Ceci permet d'augmenter cette fréquence afin d'améliorer les performances du détecteur en gamme d'analyse, en précision d'horloge générée, etc.

Egalement, le traitement peut être implanté sur un circuit spécialisé de type ASIC, intégrant éventuellement le capteur de mesure du signal vibratoire et ne laissant plus au microcontrôleur que la charge de la stratégie de déclenchement d'alerte. Cette solution offre l'avantage d'une compacité optimale et d'un faible coût pour une production de grande série.

## Revendications

**1.** Procédé pour la détection de vibrations engendrées par le roulage d'un pneumatique sur un insert de sécurité, dans lequel on mesure un signal de vibrations dans une bande de fréquence donnée et on traite la mesure ainsi effectuée pour détecter un mode de résonance engendré par ce roulage, caractérisé en ce qu'on détermine l'énergie du signal ($\gamma$) mesuré par le capteur dans deux bandes de fréquences, l'une étroite ($\Delta fe$), l'autre large ($\Delta fl$), qui sont centrées sur la même raie du mode de résonance et en ce qu'on compare le rapport (K1/K2) entre ces deux énergies à un seuil d'alerte donné.

**2.** Procédé selon la revendication 1, caractérisé en ce que pour déterminer l'énergie du signal dans une bande de fréquence, on mélange (10) le signal détecté à deux signaux périodiques qui sont en quadrature de phase et dont la fréquence correspond à la fréquence du mode de résonance.

**3.** Procédé selon la revendication 2, caractérisé en ce que pour déterminer l'énergie du signal dans ladite bande de fréquence, on détermine (11 ; 12) une norme d'un vecteur dont les deux coordonnées correspondent au signal mesuré mélangé avec les deux signaux périodiques en quadrature de phase et intégrés pendant une durée égale à deux fois l'inverse de la largeur de cette bande de fréquence.

4. Procédé selon l'une des revendications 2 et 3, caractérisé en ce que les signaux périodiques sont des signaux carrés prenant un premier niveau pendant une demi-période et un niveau inverse pendant la demi-période suivante.

5. Procédé selon la revendication 4, caractérisé en ce que le signal de vibrations mesuré est échantillonné et numérisé, puis est multiplié avec des signaux carrés en quadrature de phase, dont la fréquence correspond à la fréquence du mode de résonance, qui valent 1 pendant une demi-période et -1 pendant la demi-période suivante.

6. Procédé selon la revendication 3, caractérisé en ce que la norme déterminée est la somme des valeurs absolues des coordonnées.

7. Dispositif pour la détection de vibrations engendrées par le roulage d'un pneumatique sur un insert de sécurité comportant un capteur (1) pour la mesure d'un signal de vibrations dans une bande de fréquence donnée et des moyens (4) pour traiter la mesure de ce capteur et détecter un mode de résonance engendré par ce roulage, caractérisé en ce que ces moyens de traitement (4) comportent des moyens pour mettre en oeuvre le traitement du procédé selon l'une des revendications précédentes.

8. Dispositif selon l'une des revendications précédentes, caractérisé en ce que les moyens de traitement (4) comportent un microcontrôleur 8 bits.

9. Dispositif selon la revendication 7, caractérisé en ce que ces moyens de traitement comportent des moyens analogiques.

10. Dispositif selon l'une des revendications 7 à 9, caractérisé en ce que les moyens de traitement comportent un circuit intégré spécifique.

FIG.1

FIG.2

6

Office européen
des brevets

**RAPPORT DE RECHERCHE EUROPEENNE**

Numéro de la demande

EP 99 11 7330

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.7) |
|---|---|---|---|
| A,D | WO 94 03338 A (COMPAGNIE GENERALE DES ETABLISSEMENTS MICHELIN-MICHELIN) 17 février 1994 (1994-02-17) * abrégé; revendications 1,3-7,11-14,19,22; figures 1,2,6 * * page 3, ligne 4 - page 4, ligne 13 * * page 4, ligne 27 - page 5, ligne 5 * * page 5, ligne 24 - page 6, ligne 9 * * page 8, ligne 27 - page 9, ligne 14 * * page 13, ligne 10 - page 14, ligne 28 * | 1,7 | B60C23/06 B60C17/01 |
| A | EP 0 421 065 A (LEHN F HEINRICH) 10 avril 1991 (1991-04-10) * abrégé; revendications 1-3,8; figures * * page 3, ligne 11 - page 5, ligne 32 * | 1,7 | |
| A | EP 0 695 653 A (NIPPON DENSO CO ;NIPPON SOKEN (JP)) 7 février 1996 (1996-02-07) * abrégé; revendications 1,2,7,9; figures 1-6 * * page 5, ligne 3 - ligne 38 * | 1,7 | |

DOMAINES TECHNIQUES RECHERCHES (Int.Cl.7)

B60C

Le présent rapport a été établi pour toutes les revendications

| Lieu de la recherche | Date d'achèvement de la recherche | Examinateur |
|---|---|---|
| LA HAYE | 16 décembre 1999 | Westland, P |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

 

& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 99 11 7330

La présente annexe indique les membres de la famille de brevets relatifs aux documents brevets cités dans le rapport de recherche européenne visé ci–dessus.
Lesdits members sont contenus au fichier informatique de l'Office européen des brevets à la date du
Les renseignements fournis sont donnés à titre indicatif et n'engagent pas la responsabilité de l'Office européen des brevets.

16-12-1999

| Document brevet cité<br>au rapport de recherche | | Date de<br>publication | Membre(s) de la<br>famille de brevet(s) | | Date de<br>publication |
|---|---|---|---|---|---|
| WO 9403338 | A | 17-02-1994 | FR | 2694398 A | 04-02-1994 |
| | | | CA | 2141303 A | 17-02-1994 |
| | | | DE | 69301827 D | 18-04-1996 |
| | | | DE | 69301827 T | 01-08-1996 |
| | | | EP | 0651702 A | 10-05-1995 |
| | | | ES | 2086955 T | 01-07-1996 |
| | | | JP | 7509422 T | 19-10-1995 |
| EP 0421065 | A | 10-04-1991 | DE | 4019501 A | 11-04-1991 |
| | | | JP | 3123826 A | 27-05-1991 |
| EP 0695653 | A | 07-02-1996 | DE | 69500875 D | 20-11-1997 |
| | | | DE | 69500875 T | 12-02-1998 |
| | | | JP | 8101085 A | 16-04-1996 |
| | | | US | 5596141 A | 21-01-1997 |

EPO FORM P0460

Pour tout renseignement concernant cette annexe : voir Journal Officiel de l'Office européen des brevets, No.12/82